# EUROPEAN PATENT APPLICATION

(11) **EP 3 392 798 A1**
(43) Date of publication of application: **24.10.2018**
(21) Application number: 17167514.3
(22) Date of filing: 21.04.2017
(51) Int. Cl.: G06K 9/00, G06K 9/34, G06T 7/11, G06K 9/46

(54) **A METHOD FOR THE SEMANTIC SEGMENTATION OF AN IMAGE**

(71) Applicant: Delphi Technologies, Inc., Troy MI 48007 (US)
(72) Inventor: ZOHOURIAN, Farnoush, 40233 Düsseldorf (DE); ANTIC, Borislav, 64625 Bensheim (DE); SIEGEMUND, Jan, 50825 Köln (DE); MEUTER, Mirko, 40699 Erkrath (DE)
(74) Representative: Manitz Finsterwald Patentanwälte PartmbB

(57) **Abstract**

A method for the semantic segmentation of an image having a two-dimensional arrangement of pixels comprises the steps of segmenting at least a part of the image into superpixels, determining image descriptors for the superpixels, wherein each image descriptor comprises a plurality of image features, feeding the image descriptors of the superpixels to a convolutional network and labeling the pixels of the image according to semantic categories by means of the convolutional network, wherein the superpixels are assigned to corresponding positions of a regular grid structure extending across the image and the image descriptors are fed to the convolutional network based on the assignment.

## Description

The present invention relates to a method for the semantic segmentation of an image having a two-dimensional arrangement of pixels.

Automated scene understanding is an important goal in the field of modern computer vision. One way to achieve automated scene understanding is the semantic segmentation of an image, wherein each pixel of the image is labelled according to semantic categories. Such a semantic segmentation of an image is especially useful in the context of object detection for advanced driver assistance systems (ADAS). For example, the semantic segmentation of an image could comprise the division of the pixels into regions belonging to the road and regions that don't belong to the road. In this case, the semantic categories are "road" and "non-road". Depending on the application, there can be more than two semantic categories, for example "pedestrian", "car", "traffic sign" and the like. Since the appearance of pre-defined regions such as road regions is variable, it is a challenging task to correctly label the pixels.

Machine learning techniques enable a visual understanding of image scenes and are helpful for a variety of object detection and classification tasks. Such techniques may use convolutional networks. Currently, there are two major approaches to train network-based image processing systems. The two approaches differ with respect to the input data model. One of the approaches is based on a patch-wise analysis of the images, i.e. an extraction and classification of rectangular regions having a fixed size for every single image. Due to the incomplete information about spatial context, such methods have only a limited performance. A specific problem is the possibility of undesired pairings in the nearest neighbor search. Moreover, the fixed patches can span multiple distinct image regions, which can degrade the classification performance.

There are also approaches which are based on full image resolution, wherein all pixels of an image in the original size are analyzed. Such methods are, however, prone to noise and require a considerable amount of computational resources. Specifically, deep and complex convolutional networks are needed for full image resolution. Such networks require powerful processing units and are not suitable for real-time applications. In particular, deep and complex convolutional networks are not suitable for embedded devices in self-driving vehicles.

It is an object of the invention to provide a method for the semantic segmentation of an image which is in a position to deliver accurate results with a low computing effort.

The object is satisfied in accordance with the invention by a method in accordance with claim 1.

A method in accordance with the invention comprises the following steps: segmenting at least a part of the image into superpixels, wherein the superpixels are coherent image regions comprising a plurality of pixels having similar image features,
determining image descriptors for the superpixels, wherein each image descriptor comprises a plurality of image features,
feeding the image descriptors of the superpixels to a convolutional network and labeling the pixels of the image according to semantic categories by means of the convolutional network, wherein
the superpixels are assigned to corresponding positions of a regular grid structure extending across the image and the image descriptors are fed to the convolutional network based on the assignment.

Superpixels are obtained from an over-segmentation of an image and aggregate visually homogeneous pixels while respecting natural boundaries. In other words, superpixels are the result of a local grouping of pixels based on features like color, brightness or the like. Thus, they capture redundancy in the image. Contrary to rectangular patches of a fixed size, superpixels enable the preservation of information about the spatial context and the avoidance of the above mentioned problem of pairings in the nearest neighbor search. Compared to full image resolution, a division of the images into superpixels enables a considerable reduction of computational effort.

Usually, superpixels have different sizes and irregularly shaped boundaries. An image analysis based on superpixels is therefore not suitable as an input data model for a convolutional network. A regular topology is needed to convolute the input data with kernels. However, the regular grid structure enables to establish an input matrix for a convolutional network despite the superpixels having different sizes and irregularly shaped boundaries. By means of the regular grid structure, the superpixels are "re-arranged" or "re-aligned" such that a proper input into a convolutional network is possible.

Advantageous embodiments of the invention can be seen from the dependent claims and from the following description.

The image descriptors are preferably fed to a convolutional neural network (CNN). Convolutional neural networks are efficient machine learning tools suitable for a variety of tasks and having a low error rate.

The assigning of the superpixels to corresponding positions of the regular grid structure can be carried out by means of a grid projection process. Such a projection process can be carried out in a quick and easy manner. Preferably, the projection is centered in the regular grid structure.

Preferably, the segmentation of at least a part of the image into superpixels is carried out by means of an iterative clustering algorithm, in particular by means of a simple linear iterative clustering algorithm (SLIC algorithm). A simple linear iterative clustering algorithm is disclosed, for example, in the paper "SLIC Superpixels" by Achanta R. et al., EPFL Technical Report 149300, June 2010. The SLIC algorithm uses a distance measure that enforces compactness and regularity in the superpixel shapes. It has turned out that the regularity of the superpixels generated by a SLIC algorithm is sufficient for projecting the superpixel centers onto a regular lattice or grid.

In accordance with an embodiment of the invention, the iterative clustering algorithm comprises a plurality of iteration steps, in particular at least 5 iteration steps, wherein the regular grid structure is extracted from the first iteration step. The first iteration step of a SLIC algorithm delivers a grid or lattice, for example defined by the centers of the superpixels. This grid has a sufficient regularity to be used as the regular grid structure. Thus, the grid extracted from the first iteration step can be used in an advantageous manner to establish a regular topology for the final superpixels, i. e. the superpixels generated by the last iteration step.

Specifically, the superpixels generated by the last iteration step can be matched to the regular grid structure extracted from the first iteration step.

The regular grid structure can be generated based on the positions of the centers of those superpixels which are generated by the first iteration step. It has turned out that the grid structure is only slightly distorted in the course of the further iterations.

In accordance with a further embodiment of the invention, the convolutional network includes 10 or less layers, preferably 5 or less layers. In other words, it is preferred to not use a deep network. This enables a considerable reduction of computational effort.

In particular, the convolutional network can be composed of two convolutional layers and two fully-connected layers. It has turned out that such a network is sufficient for reliable results.

In accordance with a further embodiment of the invention, each of the image descriptors comprises at least 30, preferably at least 50 and more preferably at least 80 image features. In other words, it is preferred to use a high-dimensional descriptor space. This provides for high accuracy and reliability.

In particular, each of the image descriptors can comprise a plurality of "histogram of oriented gradients"-features (HOG-features) and/or a plurality of "local binary pattern"-features (LBP-features).

The invention also relates to a method for the recognition of objects in an image of a vehicle environment comprising a semantic segmentation method as described above.

A further subject of the invention is a system for the recognition of objects from a motor vehicle, wherein the system includes a camera to be arranged at the motor vehicle and an image processing device for processing images captured by the camera.

According to the invention, the image processing device is configured for carrying out a method as described above. Due to the reduction of computational effort achieved by combining the superpixel segmentation and the use of a convolutional network, the image processing device can be configured sufficiently simple to be embedded in an autonomous driving system or an advanced driver assistance system.

Preferably, the camera is configured for repeatedly or continuously capturing images and the image processing device is configured for a real-time processing of the captured images. It has turned out that a superpixel-based approach is sufficiently fast for a real-time processing.

A computer program product is also a subject of the invention including executable program code which, when executed, carries out a method in accordance with the invention.

Subsequently, the present invention is explained in more detail based on an exemplary embodiment with reference to the accompanying figures, wherein:
- Fig. 1: is a digital image showing the environment of a motor vehicle.
- Fig. 2: is an output image generated by semantically segmenting the image shown in Fig. 1.
- Fig. 3: is a digital image segmented into superpixels.
- Fig. 4: is a representation to illustrate a method in accordance with the invention; and
- Fig. 5: is a representation to illustrate the machine learning capability of the method in accordance with the invention.

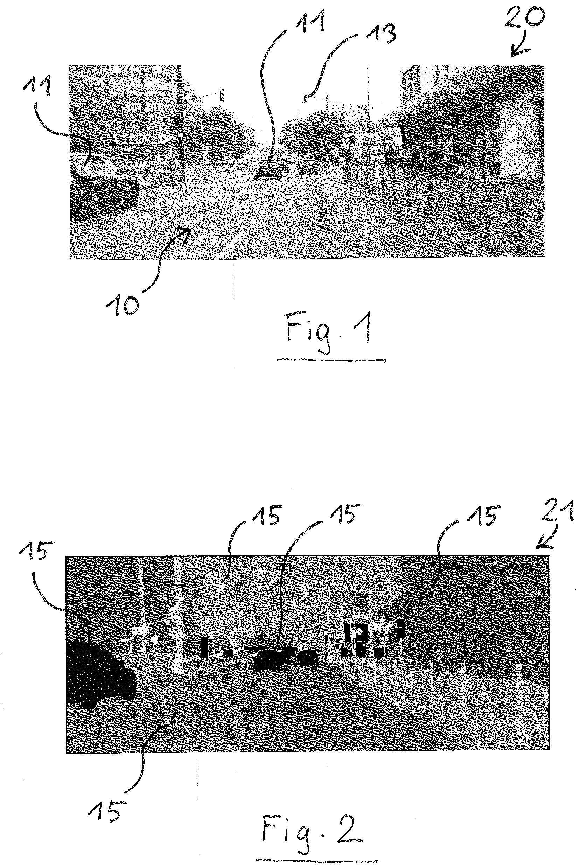

In Fig. 1, there is shown an original image 20 captured by a digital camera which is attached to a motor vehicle. The image 20 comprises a two-dimensional arrangement of individual pixels which are not visible in Fig. 1. In the original image 20, various objects of interest such as the road 10, vehicles 11 and traffic signs 13 are discernable. For autonomous driving applications and advanced driver assistance systems, a computer-based understanding of the captured scene is required. A measure for achieving such an automated scene understanding is the semantic segmentation of the image, wherein each pixel is labeled according to semantic categories such as "road", "non-road", "pedestrian", "traffic sign" and the like. In Fig. 2, there is exemplarily shown a processed image 21 as a result of a semantic segmentation of the original image 20 (Fig. 1). The semantic segments 15 of the processed image 21 correspond to the different categories and are displayed in different colors or gray levels.

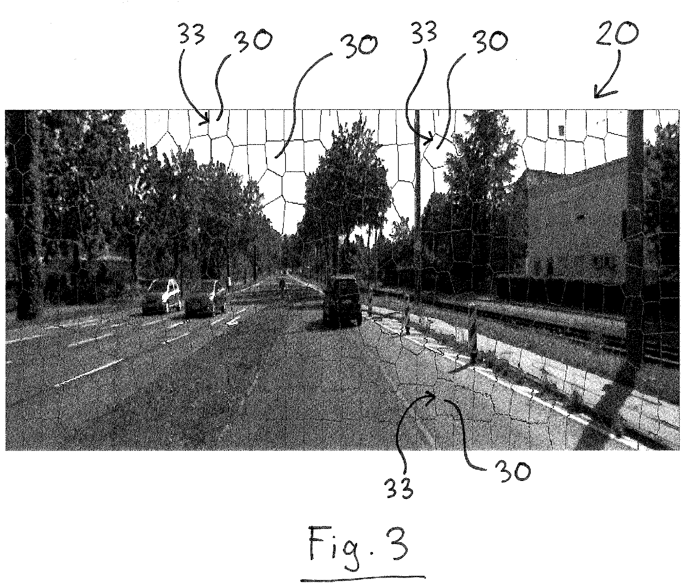

In accordance with the invention, a method for the semantic segmentation of a captured original image 20 comprises the step of segmenting the original image 20 into superpixels 30 as shown in Fig. 3. Superpixels are coherent image regions comprising a plurality of pixels having similar image features. The segmenting into the superpixels 30 is carried out by a simple linear iterative clustering algorithm (SLIC algorithm) as described in the paper "SLIC Superpixels" by Achanta R. et al., EPFL Technical Report 149300, June 2010. The simple linear iterative clustering algorithm comprises a plurality of iteration steps, preferably at least 5 iteration steps. As can be seen in Fig. 3, the superpixels 30 have slightly different sizes and irregular boundaries 33.

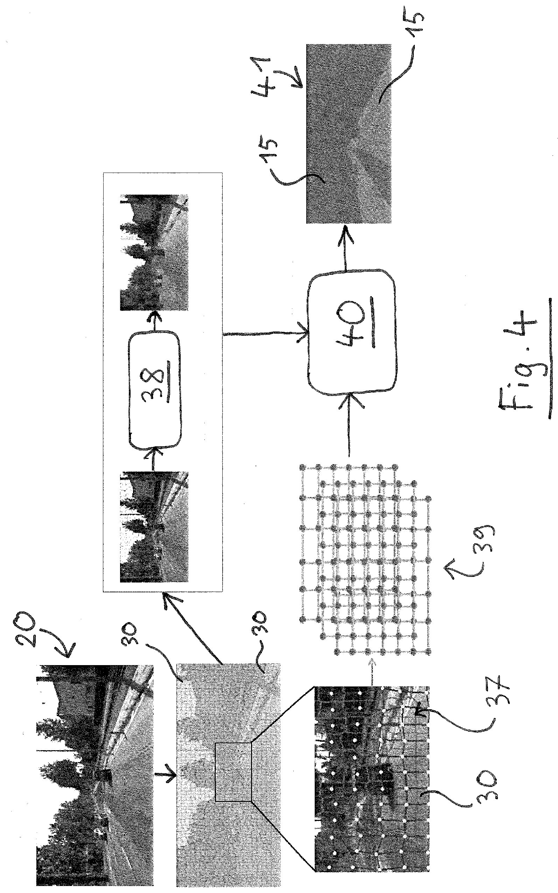

As shown in Fig. 4, a two-dimensional, regular and rectangular grid structure 37 or lattice structure extending across the original image 20 is extracted from the first iteration step of the simple linear iterative clustering algorithm. Specifically, the grid structure 37 is generated based on the positions of the centers of those superpixels 30 which are generated by the first iteration step.

When the simple linear iterative clustering algorithm is completed, the final superpixels 30, i. e. the superpixels 30 generated by the last iteration step, are overlaid with the grid structure 37 by means of a grid projection centered in the grid structure 37. Further, local image descriptors are determined for each of the superpixels 30 in a descriptor determination step 38, wherein each image descriptor comprises a plurality of image features, preferably 70 image features or more. Depending on the application, each of the image descriptors can comprise a plurality of "histogram of oriented gradients"-features (HOG-features) and/or a plurality of "local binary pattern"-features (LBP-features).

Based on the projection of the final superpixels 30 centered in the grid structure 37, the image descriptors of the final superpixels 30 are fed as input data 39 to a convolutional neural network (CNN) 40. Preferably, the convolutional neural network 40 has only few layers, for example 5 or less layers. By means of the convolutional neural network (CNN) 40, the pixels of the original image 20 are labeled according to semantic categories. As an example, Fig. 4 shows an output image 41 segmented according to the two semantic categories "road" and "non-road".

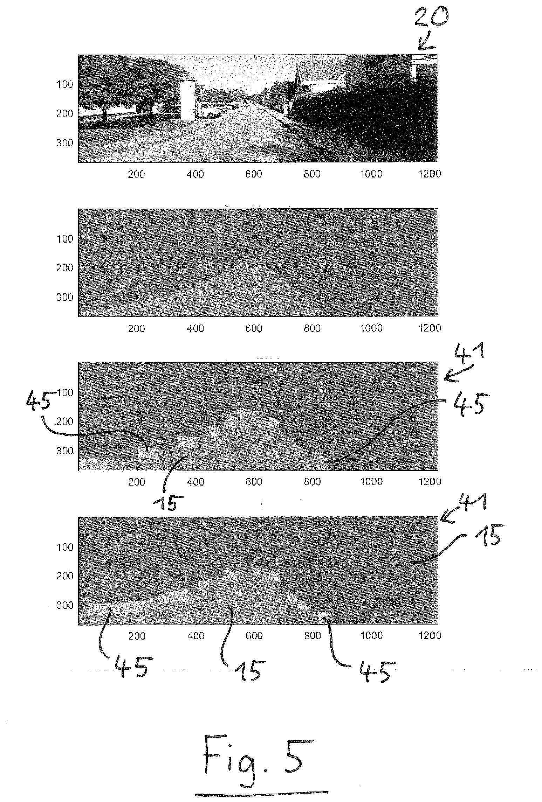

Fig. 5 shows training results for a method in accordance with the present invention. In the topmost panel, the original image 20 is shown. The panel below the topmost panel represents the ground truth, here determined manually. The two lower panels shows the output of the semantic segmentation, wherein the lowermost panel represents the prediction. Unsure segments 45 are present at the boundaries of the semantic segments 15. It can be seen that the prediction capability is sufficient.

Since the convolutional neural network (CNN) 40 is rather simple, the accurate results can be achieved without complex computer hardware and even in embedded real-time systems.

### List of Reference Numerals:

- 10: road
- 11: vehicle
- 13: traffic sign
- 15: semantic segment
- 20: original image
- 21: processed image
- 30: superpixel
- 33: boundary
- 37: grid structure
- 39: input data
- 40: convolutional neural network
- 41: output image
- 45: unsure segment

## Claims

1. A method for the semantic segmentation of an image (20) having a two-dimensional arrangement of pixels, comprising the steps:
segmenting at least a part of the image into superpixels (30), wherein the superpixels (30) are coherent image regions comprising a plurality of pixels having similar image features,
determining image descriptors for the superpixels, wherein each image descriptor comprises a plurality of image features,
feeding the image descriptors of the superpixels to a convolutional network (40) and
labeling the pixels of the image (20) according to semantic categories by means of the convolutional network (40), wherein
the superpixels (30) are assigned to corresponding positions of a regular grid structure (37) extending across the image (20) and the image descriptors are fed to the convolutional network (40) based on the assignment.

2. A method in accordance with claim 1,
**characterized in that**
the image descriptors are fed to a convolutional neural network (CNN).

3. A method in accordance with claim 1 or claim 2,
**characterized in that**
the assigning of the superpixels (30) to corresponding positions of the regular grid structure (37) is carried out by means of a grid projection process.

4. A method in accordance with any one of the preceding claims,
**characterized in that**
the segmentation of at least a part of the image (20) into superpixels (30) is carried out by means of an iterative clustering algorithm, in particular by means of a simple linear iterative clustering algorithm (SLIC).

5. A method in accordance with claim 4,
**characterized in that**
the iterative clustering algorithm comprises a plurality of iteration steps, in particular at least 5 iteration steps, wherein the regular grid structure (37) is extracted from the first iteration step.

6. A method in accordance with claim 5,
**characterized in that**
the superpixels (30) generated by the last iteration step are matched to the regular grid structure (37) extracted from the first iteration step.

7. A method in accordance with claim 5 or 6,
**characterized in that**
the regular grid structure (37) is generated based on the positions of the centers of those superpixels (30) which are generated by the first iteration step.

8. A method in accordance with any one of the preceding claims,
**characterized in that**
the convolutional network (40) includes 10 or less layers, preferably 5 or less layers.

9. A method in accordance with claim 8,
**characterized in that**
the convolutional network (40) is composed of two convolutional layers and two fully connected layers.

10. A method in accordance with any one of the preceding claims,
**characterized in that**
each of the image descriptors comprises at least 30, preferably at least 50 and more preferably at least 80 image features.

11. A method in accordance with any one of the preceding claims,
**characterized in that**
each of the image descriptors comprises a plurality of "histogram of oriented gradients"-features (HOG-features) and/or a plurality of "local binary pattern"-features (LBP-features).

12. A method for the recognition of objects (10, 11, 13) in an image (20) of a vehicle environment, comprising a semantic segmentation method in accordance with any one of the preceding claims.

13. A system for the recognition of objects (10, 11, 13) from a motor vehicle,
wherein the system includes a camera to be arranged at the motor vehicle and an image processing device for processing images (20) captured by the camera,
**characterized in that**
the image processing device is configured for carrying out a method in accordance with any one of claims 1 to 12.

14. A system in accordance with claim 13,
**characterized in that**
the camera is configured for repeatedly or continuously capturing images (20) and the image processing device is configured for a real-time processing of the captured images (20).

15. A computer program product including executable program code which, when executed, carries out a method in accordance with any one of claims 1 to 12.
